# EUROPEAN PATENT SPECIFICATION

(11) **EP 1 984 111 B1**
(45) Date of publication and mention of the grant of the patent: **31.08.2011**
(21) Application number: 07705579.6
(22) Date of filing: 13.02.2007
(51) Int. Cl.: B01J 19/10, B01J 19/12

(54) **METHOD FOR ACTIVATION OF CHEMICAL OR CHEMICAL-PHYSICAL PROCESSES BY A SIMULTANEOUS USE OF MICROWAVES AND ULTRASONIC PULSES AND CHEMICAL REACTOR THAT CARRIES OUT THIS METHOD**
VERFAHREN ZUR AKTIVIERUNG VON CHEMISCHEN ODER CHEMISCH-PHYSIKALISCHEN PROZESSEN DURCH GLEICHZEITIGE VERWENDUNG VON MIKROWELLEN UND ULTRASCHALLPULSEN UND CHEMISCHER REAKTOR DAFÜR
PROCEDE D'ACTIVATION DE PROCESSUS CHIMIQUES OU CHIMICO-PHYSIQUE PAR UTILISATION SIMULTANÉE DE MICRO-ONDES ET D'IMPULSIONS ULTRASONIQUES ET RÉACTEUR CHIMIQUE RÉALISANT LEDIT PROCÉDÉ

(30) Priority: 17.02.2006 IT PI20060018
(43) Date of publication of application: 29.10.2008
(73) Proprietor: CNR - Consiglio Nazionale Delle Ricerche, 00185 Roma (IT)
(72) Inventor: LONGO, Iginio, I-56123 Pisa (IT); RAGAINI, Vittorio, I-20149 Milano (IT)
(74) Representative: Long, Giorgio
(86) International application number: PCT/IB2007/000334
(87) International publication number: WO 2007/093883

(56) References cited:
- WO-A-2004/101574
- WO-A1-2006/029841
- DE-A1- 3 934 500
- DE-A1- 4 126 145

## Description

### Field of the invention

The present invention relates to a method for activating chemical and/or physical processes hereafter called "chemical-physical processes", where as energy source ultrasonic waves and microwaves are used at the same time at direct contact with the reacting mass.

Furthermore, the invention relates to an apparatus that carries out this method.

### Description of the prior art

As well known, many chemical and/or physical processes are activated, or in any case enhanced, by high temperature and/or pressure. Therefore, in many cases a mass in a reactor is subject to a energy source that can create these conditions. For increasing temperature, traditionally, a heating apparatus is provided transferring heat to the mass in the reactor by conductivity or convection. For example, devices exist that use ultrasonic waves usually at a frequency set between 20 and 500 kHz to assist the conveying energy processes also through cavitation phenomena. Such apparatus normally provide an electric generator that delivers periodic waves to a transducer comprising a piezoelectric element connected to a vibrating element arranged in a chamber where the reacting mass is present.

More recently a wide diffusion of microwave apparatus has occurred for uses in laboratories and in the industry. In this type of apparatus, a quick variation of an electromagnetic field that penetrates the mass causes its direct heating with a maximum efficiency with respect to the traditional heating methods.

The microwave apparatus provide typically the use of a container, or reactor, of plastic material, or of glass, and in any case of not metallic material, which is arranged to form a closed metal cavity, such as a oven, a resonating cavity or a wave guide for being irradiated by radio waves at high frequency, usually comprised between 10⁹ and 10¹² Hz. More in detail, microwaves propagate in the closed metal cavity by reflection on the inner walls. The microwaves are generated by a Magnetron that causes a electronic beam to oscillate at a very high frequency, thus creating the microwaves, or more recently by solid state oscillating devices. These apparatus have relevant advantages with respect to the traditional heat sources. In fact, they are capable of providing an exceptionally quick heating of the mass in the reactor, quickly reaching higher temperatures than in the apparatus conventionally used.

However, the heating technology with use of microwave ovens or metal wave guides has some drawbacks.

Firstly, the reactors used for this type of technology have to be made of a material that is in general transparent to microwaves. The reactors, are usually closed in microwave ovens or in wave guides, i.e. in metal containers, causing problems to the operator because they block a direct visual, manual and instrumental access. Furthermore, it is not possible to use microwaves in case of reactions that take place at high pressures, since metal reactors with high thicknesses required for these reactions cannot be run across by microwaves.

In the last years, furthermore, studies have been carried out for evaluating the possibility of a combined use of microwaves and ultrasonic pulses. However, such studies have shown that relevant problems exist to use at the same time such technologies. In particular, the introduction of ultrasonic transducers consisting of metal sticks in reactors, or wave guides, irradiated with microwaves, generates electromagnetic interference phenomena. On the other hand the use of ultrasonic pulses in the shape of quartz sticks, i.e. transparent to microwaves, in the microwave resonating cavities reduces the efficiency of the process and does not eliminate the above described drawbacks.

In addition to the above, prior-art document WO 2004/101574 discloses a process for preparing a phthalocyanine by using both microwave and ultrasonic wave energy, but wherein nor the microwaves nor the ultrasonic energy come at direct contact with the reacting mass.

Also in prior-art document DE 3934500 there is described a process for the sterilization of food, wherein microwaves and ultrasonic impulses are used, but wherein, again, no direct contact is made between the food and the antenna nor the transducer.

### Summary of the invention

It is therefore a first feature of the invention to provide a method for activation of chemical-physical processes by a simultaneous use of microwaves and ultrasonic pulses to increase the efficiency of the processes same, as per claim 1 and dependent claim thereof.

It is another feature of the invention to provide such a method that is extremely easy, i.e. that can be used in many application fields.

It is also a feature of the invention to provide such a method that is adapted to overcome the difficulties of the prior art.

It is a further feature of the invention to activate chemical-physical processes by a simultaneous use of microwaves and ultrasonic pulses as above disclosed for applying the microwave technology also in the field of reactions that take place in conditions of high pressure.

It is also a feature of the invention to provide such an apparatus that is cheap with respect to apparatus of prior art.

Hereinafter with the term "reaction" a desired type of phenomenon is to be understood that is not exclusively of chemical type, but also of physical type or a combination thereof, and with the expression "reacting mass" a desired type of material subject to this process is to be understood.

These and other features are accomplished with one exemplary method for the activation of chemical-physical processes by the simultaneous use of microwaves and ultrasonic pulses comprising the steps of:
- generating an electromagnetic field by a microwave source (40) and irradiating said electromagnetic field by a microwaves antenna (3),
- generating an ultrasonic field by a generator of electric current at high frequency (45) and irradiating said ultrasonic field by an ultrasonic transducer (2),
- activating a reacting mass by the combined use of the electromagnetic field and of the ultrasonic field, characterised in that said activation of said reacting mass is made by arranging the microwave antenna and the ultrasonic transducer at direct contact with the reacting mass,
whereby a high efficiency is obtained of the processes same.

In particular, the reacting mass is activated by a simultaneous action, either in phase or out of phase, of a microwave electromagnetic field and of a pressure field operating at ultrasonic frequencies.

Advantageously, before starting the activation step, the reacting mass is previously put in a process chamber.

According to another aspect of the invention, an apparatus for activation of chemical-physical processes by a simultaneous use of microwaves and ultrasonic pulses comprises:
- a microwave source,
- a source of ultrasonic pulses,
- means for transmitting the microwaves generated by the microwave source to a reacting mass,
- means for transmitting the ultrasonic pulses obtained from the source of ultrasonic pulses to the reacting mass,
whose main feature is that the means for transmitting the microwaves and the means for transmitting ultrasonic pulses are arranged at direct contact of the reacting mass.

In particular, the apparatus can comprise, furthermore, a process chamber in which the reacting mass is arranged. More in detail, the process chamber can be a reactor for chemical and/or physical applications of the type commonly used in industrial fields or in laboratories. The possibility of putting the means for transmitting the microwaves in the reacting mass and then in the container allows in particular, to make the latter of a metal material. This allows, in particular, to use microwaves also in processes that occur at high pressures and then to increase remarkably the variety of possible applications.

Preferably, the means for transmitting the microwaves comprise at least one microwave antenna, for example of co-axial,type, or in wave guide, arranged at an end of a connector for being operatively connected to the microwave source, and at the other end of a microwave emitter adapted to irradiate onto the reacting mass.

In particular, the end of the antenna at which the transmission of microwaves is carried out can be of the type with dipole, or monopolar type, and have one form selected from the group comprised of:
- a spiral,
- coated with dielectric material,
- with a radiating slit
- with more radiating slits,
- with metal tip.

Preferably, the ultrasonic transmission means comprises at least one ultrasonic wave emitter having elongated shape. This way, it is possible to position the means for transmitting the microwaves and the ultrasonic transmission means very close to each other optimizing the desired synergistic effect.

Advantageously, in operative conditions the means for transmitting the microwaves and the means for transmitting ultrasonic pulses are arranged substantially at right angles.

In particular, the apparatus can comprise, furthermore, means for measuring at least one parameter of process, for example pressure or temperature.

Furthermore, the apparatus can provide also means for mixing the reacting mass, for example a mixer of the type with magnetic bar.

Advantageously, the reaction container can provide a coating layer of a heat-insulating material.

Advantageously, the antenna is coated with a closed sheath of inert material, for example PTFE, glass, ceramic etc., adapted to avoid a direct contact with the reagents.

In particular, means can be provided for modulating the frequency of microwaves and means for modulating ultrasonic frequency to adjust the power transmitted to the reacting mass responsive to the type of process.

The apparatus for activation of chemical and/or physical processes, as above described, increases considerably the control, the speed, the selectivity and the tightness of the processes for which it is employed.

In case of use of high energy power to avoid residual emissions out of the reaction container, a shielding layer opaque to microwaves can be provided, for example, a film, a varnish, or a metal net.

According to a further aspect of the invention the method for activation of chemical-physical processes by a simultaneous use of microwaves and ultrasonic pulses above described can be advantageously used for one of the following applications:
- removing pollutants present in the ground water table,
- extracting active principles from solid materials,
- extracting pollutants from polluted soil.

### Brief description of the drawings

The invention will be now shown with the following description of an exemplary embodiment thereof, exemplifying but not limitative, with reference to the attached drawings wherein:
- Figure 1 shows diagrammatically an elevational front view of a apparatus for activation of chemical-physical processes by a simultaneous use of microwaves and ultrasonic pulses, according to the invention,
- Figure 2 shows diagrammatically an elevational front view of a first exemplary embodiment of a reaction chamber that can be used in the apparatus of figure 1,
- Figure 3 shows diagrammatically an elevational front view of a further exemplary embodiment of a reaction chamber that can be used in the apparatus of figure 1,
- Figure 4 shows a possible application of the method for activation of chemical-physical processes by a simultaneous use of microwaves and ultrasonic pulses, according to the invention.

### Description of the preferred embodiments

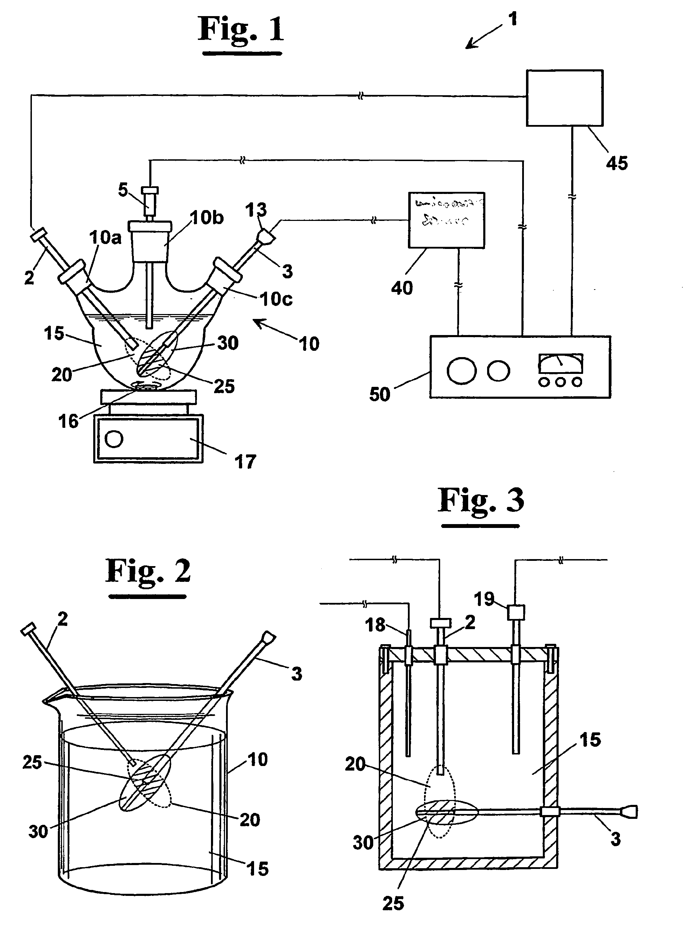

In figure 1 an apparatus 1 is diagrammatically shown for activation of chemical-physical processes, according to the invention. It comprises a microwave source 40, for example a Magnetron or a Klystron or a solid state oscillator (FET transistor), operatively connected at one end of a microwave antenna, for example a co-axial antenna 3, at a connector 13. The apparatus, furthermore, comprises a generator of electric current 45 at high frequency connected to an ultrasonic transducer 2 for example by a shielded cable, not shown in the figure. In operative conditions, the antenna 3 and the ultrasonic transducer 2 are arranged substantially at right angles and at direct contact with a reacting mass 15 contained in container 10 in order to activate it and then to complete the desired chemical and/or physical process. More in detail, the reacting mass 15 is subject contemporaneously, or alternatively, to an electromagnetic field generated by antenna 3, diagrammatically indicated in figure by line 30, and from the ultrasonic field 20 generated by the ultrasonic transducer 2.

The arranging the microwave antenna 3 and of the ultrasonic transducer 2 in the reacting mass 15 allows to optimize the efficiency of the process through a synergistic effect of the electromagnetic field and of the ultrasonic field.

The process chamber can be a common container for laboratories, for example a sphere with 3 apertures 10a, 10b and 10c (figure 1), or a beacker (figure 2), and can be of glass or other inert material, and also with metal walls, which can be coated with a inner layer of PTFE, alumina, or other resistant material at high temperature and pressures. The possibility to use containers that are common in laboratories, without the need of arranging them in ovens or metal cavities, provides considerable savings with respect to apparatus of prior art. Furthermore, the reaction site is easily accessible, for example to introduce in it measuring instruments such as temperature sensors 5 (figure 1), or pressure sensors 19 (figure 3). This way, it is possible to monitor instantly the operative conditions and intervene therefore in real time on the modular process parameters at the frequency and the power of the ultrasonic waves and of microwaves.

In case it is necessary to use high power reaction container 10 can be coated with a shielding layer next to the external walls and opaque to microwaves. This prevents propagation of microwaves out of the container avoiding losses and allowing the operators to operate in conditions of extreme safety. The shielding layer can be made for example, by a film, a varnish, or a metal net that reflect microwaves back to the reacting mass 15. For mixing effectively the reacting mass 15, in the reaction container 10 a magnetic bar 16 (figure 1) can be put that is rotated the reacting mass 15 by a stirring magnet 17. As diagrammatically shown in figure 3, in case of processes carried out at high pressures it is possible to use reaction containers 10 made with metal walls of high thickness that have an aperture for introducing the antenna 3 of the sender of ultrasonic pulses 2 and instruments for measuring the process parameters 18 and 19.

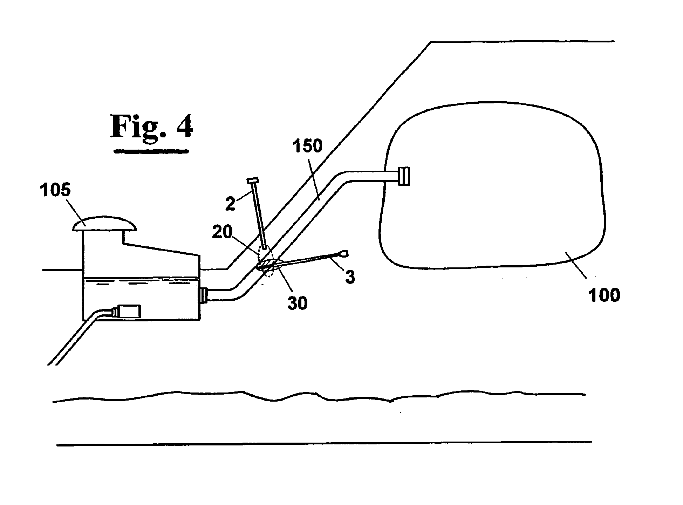

The method, according to the invention, has furthermore, a high versatility and provides very different applications. In particular, the methodology proposed is applicable even with reacting mass 15 not necessarily contained in a container of process 10. For example, as shown in figure 4 it is possible to use the antenna 3 and the sender of ultrasonic pulses 2 in the way above described for removing the pollutants present in liquid flows present in ducts 150 connected to a ground water table 100 and a sorting plant 105. It is to be understood that the method and the apparatus as above described can be used both in processes working continuously and in processes working discontinuously.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for the activation of chemical-physical processes by the simultaneous use of microwaves and ultrasonic pulses comprising the steps of:
- generating an electromagnetic field by a microwave source (40) and irradiating said electromagnetic field by a microwave antenna (3),
- generating an ultrasonic field by a generator of electric current at high frequency (45) and irradiating said ultrasonic field by an ultrasonic transducer (2),
- activating a reacting mass by the combined use of the electromagnetic field and of the ultrasonic field, **characterised in that** said activation of said reacting mass is made by arranging the microwave antenna and the ultrasonic transducer at direct contact with the reacting mass.

2. Method, according to claim 1, wherein said reacting mass is activated by a simultaneous action, either in phase or out of phase, of a microwave electromagnetic field and of a pressure field at ultrasonic frequency.

3. Apparatus for activation of chemical-physical processes by a simultaneous use of microwaves and ultrasonic pulses comprising:
- a microwave source,
- a source of ultrasonic pulses,
- means for transmitting the microwaves generated by said microwave source to a reacting mass,
- means for transmitting the ultrasonic pulses obtained from said source of ultrasonic pulses to said reacting mass, **characterised in that** said means for transmitting said microwaves and said means for transmitting said ultrasonic pulses are arranged at direct contact of said reacting mass.

4. Apparatus, according to claim 3, where a process chamber is provided in which the reacting mass is arranged.

5. Apparatus, according to claim 3, wherein said means for transmitting said microwaves comprises at least one microwave antenna arranged at one end of a connector adapted to allow the connection to said microwave source and at the other end of a microwave emitter adapted to irradiate onto said reacting mass.

6. Apparatus, according to claim 5, wherein said microwave antenna is selected from the group comprised of:
- a dipole,
- a monopole.

7. Apparatus, according to claim 5, wherein said microwave antenna has a shape selected from the group comprised of:
- a spiral,
- coated with dielectric material,
- with a radiating slit
- with more radiating slits,
- with a metal tip.

8. Apparatus, according to claim 3, wherein said ultrasonic transmission means comprises at least one transducer of ultrasonic waves having elongated shape.

9. Apparatus, according to claim 3, wherein said means for transmitting the microwaves and said means for transmitting ultrasonic pulses are arranged substantially at right angles.

10. Apparatus, according to claim 3, wherein, furthermore, means are provided for measuring at least one process parameter.

11. Apparatus, according to claim 4, wherein, furthermore, means are provided for mixing said reacting mass in said process chamber.

12. Apparatus, according to claim 4, wherein said reaction container has a coating layer of heat-insulating material.

13. Apparatus, according to claim 4, wherein said antenna is coated with a closed sheath of inert material adapted to avoid a direct contact with the reagents.

14. Apparatus, according to claim 3, wherein means are provided for modulating the frequency of said microwaves and means for modulating the frequency of said ultrasonic pulses to adjust the power transmitted to said reacting mass responsive to the type of process.

15. Apparatus, according to claim 4, wherein said reaction container has a shielding layer opaque to said microwaves.

## Patentansprüche

1. Verfahren zur Aktivierung von chemisch-physikalischen Prozessen durch die gleichzeitige Verwendung von Mikrowellen und Ultraschallpulsen, umfassend die folgenden Schritte:
- Erzeugen eines elektromagnetischen Feldes durch eine Mikrowellenquelle (40) und Abstrahlen des elektromagnetischen Feldes durch eine Mikrowellenantenne (3),
- Erzeugen eines Ultraschallfeldes durch einen Generator elektrischen Stroms mit hoher Frequenz (45) und Abstrahlen des Ultraschallfeldes durch einen Ultraschallwandler (2),
- Aktivieren einer Reaktionsmasse durch die kombinierte Verwendung des elektromagnetischen Feldes und des Ultraschallfeldes,
**dadurch gekennzeichnet, dass** die Aktivierung der Reaktionsmasse **dadurch** gemacht wird, dass die Mikrowellenantenne und der Ultraschallwandler im direktem Kontakt mit der Reaktionsmasse angeordnet werden.

2. Verfahren nach Anspruch 1, wobei die Reaktionsmasse durch eine gleichzeitige Aktion, entweder phasengleich oder phasenverschoben, eines elektromagnetischen Mikrowellenfeldes und eines Druckfeldes bei einer Ultraschallfrequenz aktiviert wird.

3. Vorrichtung zur Aktivierung von chemisch-physikalischen Prozessen durch eine gleichzeitige Verwendung von Mikrowellen und Ultraschallpulsen, umfassend:
- eine Mikrowellenquelle,
- eine Quelle von Ultraschallpulsen,
- Mittel zum Übertragen der von der Mikrowellenquelle erzeugten Mikrowellen zu einer Reaktionsmasse,
- Mittel zum Übertragen der von der Quelle von Ultraschallpulsen erhaltenen Ultraschallpulse zu der Reaktionsmasse,
**dadurch gekennzeichnet, dass** die Mittel zum Übertragen der Mikrowellen und die Mittel zum Übertragen der Ultraschallpulse im direktem Kontakt mit der Reaktionsmasse angeordnet sind.

4. Vorrichtung nach Anspruch 3, wobei eine Prozesskammer bereitgestellt ist, in welcher die Reaktionsmasse angeordnet ist.

5. Vorrichtung nach Anspruch 3, wobei die Mittel zum Übertragen der Mikrowellen wenigstens eine Mikrowellenantenne umfassen, welche an einem Ende aus einem Verbinder, der angepasst ist, um die Verbindung mit der Mikrowellenquelle zu ermöglichen, und an dem anderen Ende aus einem Mikrowellensender, der angepasst ist, auf die Reaktionsmasse abzustrahlen, eingerichtet ist.

6. Vorrichtung nach Anspruch 5, wobei die Mikrowellenantenne aus der Gruppe ausgewählt ist, umfassend:
- einen Dipol,
- einen Monopol.

7. Vorrichtung nach Anspruch 5, wobei die Mikrowellenantenne eine Gestaltung aufweist, welche von der Gruppe ausgewählt ist, umfassend:
- eine Spirale,
- beschichtet mit dielektrischem Material,
- mit einem strahlenden Schlitz,
- mit einer Metallspitze.

8. Vorrichtung nach Anspruch 3, wobei die Ultraschallübertragungsmittel wenigstens einen Wandler von Ultraschallwellen umfassen, welcher eine gestreckte Form aufweist.

9. Vorrichtung nach Anspruch 3, wobei die Mittel zum Übertragen der Mikrowellen und die Mittel zum Übertragen von Ultraschallpulsen im Wesentlichen im rechten Winkel angeordnet sind.

10. Vorrichtung nach Anspruch 3, wobei ferner Mittel zum Messen von wenigstens einem Prozessparameter bereitgestellt sind.

11. Vorrichtung nach Anspruch 4, wobei ferner Mittel zum Mischen der Reaktionsmasse in der Prozesskammer bereitgestellt sind.

12. Vorrichtung nach Anspruch 4, wobei der Reaktionsbehälter eine Überzugsschicht aus wärme-isolierendem Material aufweist.

13. Vorrichtung nach Anspruch 4, wobei die Antenne mit einem geschlossenen Mantel eines inerten Materials überzogen ist, welches geeignet ist, einen direkten Kontakt mit den Reagenzien zu verhindern.

14. Vorrichtung nach Anspruch 3, wobei Mittel zum Modulieren der Frequenz der Mikrowellen und Mittel zum Modulieren der Frequenz der Ultraschallpulse bereitgestellt sind, um die zu der Reaktionsmasse übertragene Leistung in Reaktion auf den Prozesstyp anzupassen.

15. Vorrichtung nach Anspruch 4, wobei der Reaktionsbehälter eine für die Mikrowellen undurchlässige Abschirmschicht aufweist.

## Revendications

1. Procédé d'activation de processus chimio-physiques par l'utilisation simultanée d'hyperfréquences et d'impulsions ultrasoniques comprenant les étapes consistant à :
- générer un champ électromagnétique par une source hyperfréquence (40) et rayonner ledit champ électromagnétique par une antenne hyperfréquence (3),
- générer un champ ultrasonique par un générateur de courant électrique à haute fréquence (45) et rayonner ledit champ ultrasonique par un transducteur ultrasonique (2),
- activer une masse de réaction par l'utilisation combinée du champ électromagnétique et du champ ultrasonique, **caractérisé en ce que** ladite activation de ladite masse de réaction est effectuée en agençant l'antenne hyperfréquence et le transducteur ultrasonique en contact direct avec la masse de réaction.

2. Procédé selon la revendication 1, dans lequel ladite masse de réaction est activée par une action simultanée, soit en phase, soit déphasée, d'un champ électromagnétique hyperfréquence et d'un champ de pression à une fréquence ultrasonore.

3. Dispositif d'activation de processus chimio-physiques par une utilisation simultanée d'hyperfréquences et d'impulsions ultrasoniques, comprenant :
- une source hyperfréquence,
- une source d'impulsions ultrasoniques,
- des moyens pour transmettre les hyperfréquences générées par ladite source hyperfréquence à une masse de réaction,
- des moyens pour transmettre les impulsions ultrasoniques obtenues de ladite source d'impulsions ultrasoniques à ladite masse de réaction, **caractérisé en ce que** lesdits moyens pour transmettre lesdites hyperfréquences et lesdits moyens pour transmettre lesdites impulsions ultrasoniques sont agencés en contact direct avec ladite masse de réaction.

4. Dispositif selon la revendication 3, dans lequel une chambre de traitement est prévue dans laquelle la masse de réaction est agencée.

5. Dispositif selon la revendication 3, dans lequel lesdits moyens pour transmettre lesdites hyperfréquences comprennent au moins une antenne hyperfréquence agencée à une extrémité d'un connecteur conçu pour permettre la connexion à ladite source hyperfréquence et à l'autre extrémité d'un émetteur hyperfréquence conçu pour irradier ladite masse de réaction.

6. Dispositif selon la revendication 5, dans lequel ladite antenne hyperfréquence est sélectionnée dans le groupe comprenant :
- un dipôle,
- un monopôle.

7. Dispositif selon la revendication 5, dans lequel ladite antenne hyperfréquence a une forme sélectionnée dans le groupe comprenant :
- une spirale,
- revêtue d'un matériau diélectrique,
- avec une fente de rayonnement,
- avec une pluralité de fentes de rayonnements,
- avec un bout métallique.

8. Dispositif selon la revendication 3, dans lequel lesdits moyens de transmission ultrasoniques comprennent au moins un transducteur d'ondes ultrasoniques ayant une forme allongée.

9. Dispositif selon la revendication 3, dans lequel lesdits moyens pour transmettre les hyperfréquences et lesdits moyens pour transmettre les impulsions ultrasoniques sont agencés sensiblement à angle droit.

10. Dispositif selon la revendication 3, dans lequel, en outre, des moyens sont prévus pour mesurer au moins un paramètre de processus.

11. Dispositif selon la revendication 4, dans lequel, en outre, des moyens sont prévus pour mélanger ladite masse de réaction dans ladite chambre de traitement.

12. Dispositif selon la revendication 4, dans lequel ledit récipient de réaction comporte une couche de revêtement en matériau thermo-isolant.

13. Dispositif selon la revendication 4, dans lequel ladite antenne est revêtue d'une gaine fermée en un matériau inerte conçue pour éviter un contact direct avec les réactifs.

14. Dispositif selon la revendication 3, dans lequel des moyens sont prévus pour moduler la fréquence desdites hyperfréquences et des moyens sont prévus pour moduler la fréquence desdites impulsions ultrasoniques pour ajuster la puissance transmise à ladite masse de réaction en réponse au type de processus.

15. Dispositif selon la revendication 4, dans lequel ledit récipient de réaction comporte une couche de protection opaque auxdites hyperfréquences.
